# EUROPEAN PATENT APPLICATION

(11) **EP 4 328 101 A1**
(43) Date of publication of application: **28.02.2024**
(21) Application number: 23187600.4
(22) Date of filing: 25.07.2023
(51) Int. Cl.: B60T 1/14, B66F 9/06, B62D 63/02, B60T 13/04

(54) **TROLLEY FOR HANDLING A SEMI-FINISHED PRODUCT AND SYSTEM COMPRISING THE TROLLEY, IN PARTICULAR IN THE AUTOMOTIVE FIELD**

(30) Priority: 22.08.2022 IT 202200017442
(71) Applicant: Iveco S.p.A., 10156 Torino (IT)
(72) Inventor: BOLPAGNI, Fabio, 10156 Torino (IT)
(74) Representative: Fiume, Orazio

(57) **Abstract**

System for moving a semi-finished product, in particular a heavy or commercial vehicle, comprising
- a trolley (1) equipped with three or more wheels (1.2), a self-driving vehicle (2), equipped with a pin (2.1) removable from a body of the vehicle to assume an extracted configuration and a retracted configuration; the trolley (1) being configured in the form of a portal to allow the vehicle (2) to fit under the trolley and attach the trolley using the pin (2.1), the trolley being characterized by the fact that it includes a braking system (1.10) arranged to automatically disengage when said pin (2.1) is inserted into the trolley.

## Description

### Field of the invention

The present invention relates to the field of the production of industrial vehicles for the transport of goods or for public transport. More specifically, the invention concerns a trolley and a system including the trolley, for moving the vehicle during its assembly.

### State of the art

During the assembly of heavy vehicles it is necessary to move them along a succession of assembly stations. Each station is specialized to perform the assembly of certain parts of the vehicle.

Therefore, each station also requires adaptation of the height of the vehicle in order to make the assembly of the relevant portion more comfortable and easier.

In the automotive field, overhead cranes are known, from which vehicles are suspended during the assembly process. However, it is not possible to use the same handling system for industrial vehicles due to their size and weight.

On the other hand, the use of autonomously driven vehicles for moving loads, named AGVs from the acronym "Automated Guided Vehicles", is known. However, even in this case, these can be widely implemented when the loads to be handled are limited.

To move a heavy vehicle it is necessary to design and build an AGV of relevant sizes, which has sufficient strength to support this load.

However, this solution leads to huge costs and above all to the creation of an AGV that hardly could find application in other areas.

Unless specifically excluded in the detailed description that follows, what is described in this chapter is to be considered as an integral part of the detailed description.

### Summary of the invention

The aim of the present invention is to move an industrial vehicle during its assembly, using an AGV, without resorting to the complete redesign of the AGV itself.

The basic idea of the present invention is to exploit an existing AGV and couple it to a trolley so that the trolley holds the load, while the AGV provides at least the propulsion for moving the trolley along the assembly line. More specifically, the AGV is of the ultra-flat type, named "lurking type" or "flat AGV" in the Anglo-Saxon language, equipped with a so-called removable pin for attaching the trolley and towing it.

According to the present invention, the trolley is configured so as to define a housing for the AGV, preferably with a coupling having a minimum clearance, and includes, in the upper part, one of
- Flange for fastening to a vehicle chassis,
- Housing for fixing a front motor axle,
- Rear portion.
to be permanently fixed to an industrial vehicle, subject to assembly.

To prevent any trajectory error of the AGV, during the coupling of the AGV with the trolley, from causing the trolley to move, the trolley is equipped with a brake and the AGV is equipped with a system for disengaging the brake.

According to a preferential aspect of the present invention, the AGV is equipped with a pin capable of assuming a retracted position and an extracted position from the body of the AGV and capable of rotating around its own longitudinal development axis, at least when in the extracted condition.

In a complementary way, the trolley is equipped with a brake disengagement system when the pin is completely inserted, in its extracted condition, in a slot made in the trolley.

In other words, the coupling of the trolley by the AGV determines the automatic disengagement of the trolley brake.

Preferably, the trolley is equipped with an actuation system for lifting the load which uses the rotation of the AGV pin as a movement source.

In other words, thanks to the present invention, the AGV is capable of using the pin to
- hook the trolley by deactivating the trolley brake at the same time, by lifting the pin,
- raise or lower the load by rotating the previously attached pin.

According to another aspect of the present invention, two or more trolleys arranged along the longitudinal development of the vehicle are used to move the vehicle. Therefore, the operation of the AGVs is synchronous with each other.

Advantageously, two or more AGVs of small size and modest power are used to move an industrial vehicle with a weight and size significantly greater than the trolley.

Advantageously, the fact of using two or more trolleys allows an immediate adaptation of the vehicle assembly line, since to assemble vehicles of different lengths it is not necessary to use dedicated trolleys, but it is sufficient to vary the distance between two consecutive trolleys.

At most it is necessary to replace the trolley flange for fixing the vehicle to the trolley.

The operating instructions of each AGV are stored in the AGV itself. However, according to a preferred aspect of the present invention, when two or more AGVs work synchronously for the movement of a common industrial vehicle, one AGV works as a MASTER device and the others as SLAVE devices, carrying out the instructions of the MASTER device, imparted via a wireless data connection.

The dependent claims describe preferred variants of the invention, forming an integral part of the present description.

### Brief description of the figures

Further objects and advantages of the present invention will be clear from the following detailed description of an example of its implementation (and its variants) and from the attached drawings given purely for explanatory and non-limiting purposes, in which:
Figs. 1 - 3 show respectively a side, front and top view of an ultra-flat AGV coupled to a trolley which is the object of the present invention;
Fig. 4 discloses the AGV of Figs. 1 while it is decoupled from the relative trolley;
Fig. 5 shows a trolley according to a perspective view in a raised configuration of the trolley;
Figs. 6a and 6b show two side views of the AGV of Figs. 1 - 3 according to two operating configurations;

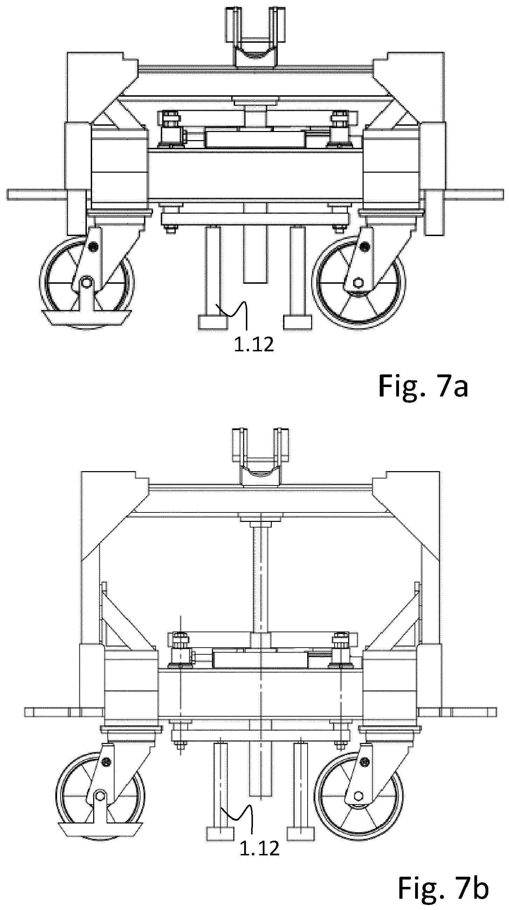

Figs. 7a and 7b show two configurations of the trolley, in particular in Fig. 7b the trolley is in the same raised configuration as in Fig. 5, while in Fig. 7a it is in a lowered configuration;
Figs. 8 and 9 show respectively perspective and lateral views of a component of the trolley of the previous figures;
Figs. 10 and 11 show perspective views of a portion of the trolley of the previous figures according to two operating conditions;
Fig. 12 shows a perspective view of a further portion of the trolley of the previous figures.

The same reference numbers and letters in the figures identify the same elements or components or functions.

It should also be noted that the terms "first", "second", "third", "higher", "lower" and the like may be used here to distinguish various elements. These terms do not imply a spatial, sequential, or hierarchical order for the modified elements unless specifically indicated or inferred from the text.

The elements and characteristics illustrated in the different preferred embodiments, including the drawings, can be combined with each other without departing from the scope of protection of the present application as described below.

### Detailed description

### Overall description of the system

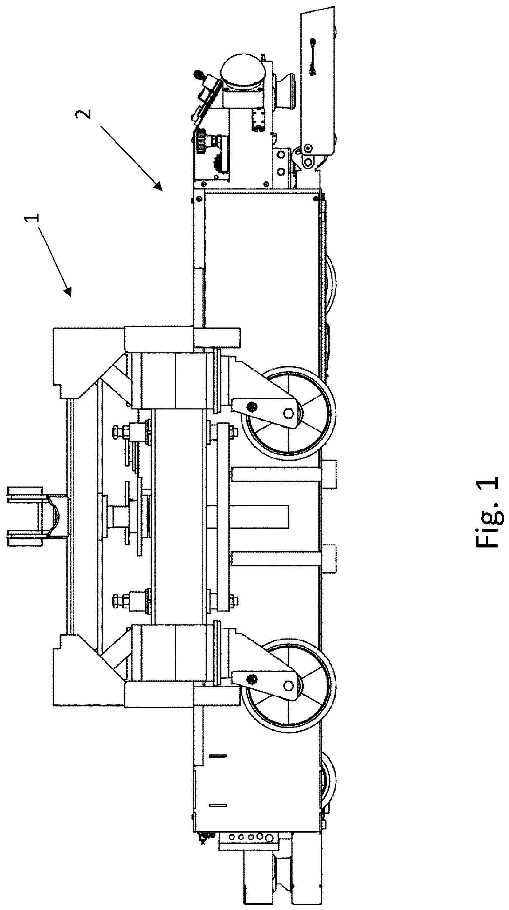

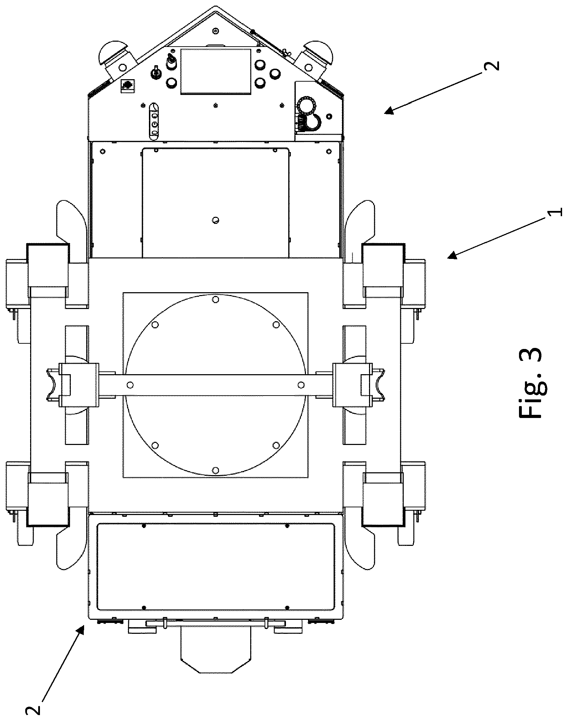

Figs. 1 - 3 show views of an ultra-flat AGV coupled to a trolley 1 according to the present invention, respectively according to a side, front and top view.

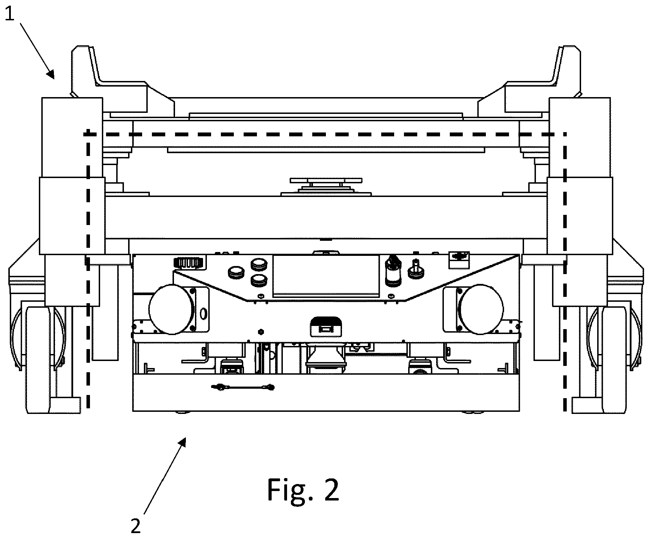

The trolley 1 forms a portal equipped with at least three wheels so as to be stable and is preferably equipped with two or more wheels on each side. In particular, according to the front view of Fig. 2, the trolley defines the shape of pi, which has been marked with thick, dashed lines. Therefore, two support sides of the trolley are identified, i.e. the sides in which the wheels and braking pads described below are housed and two passage sides of the trolley, through which the AGV can pass.

The AGV is of the flat or ultra-flat type and includes autonomous handling means and a processing unit configured to control the handling means.

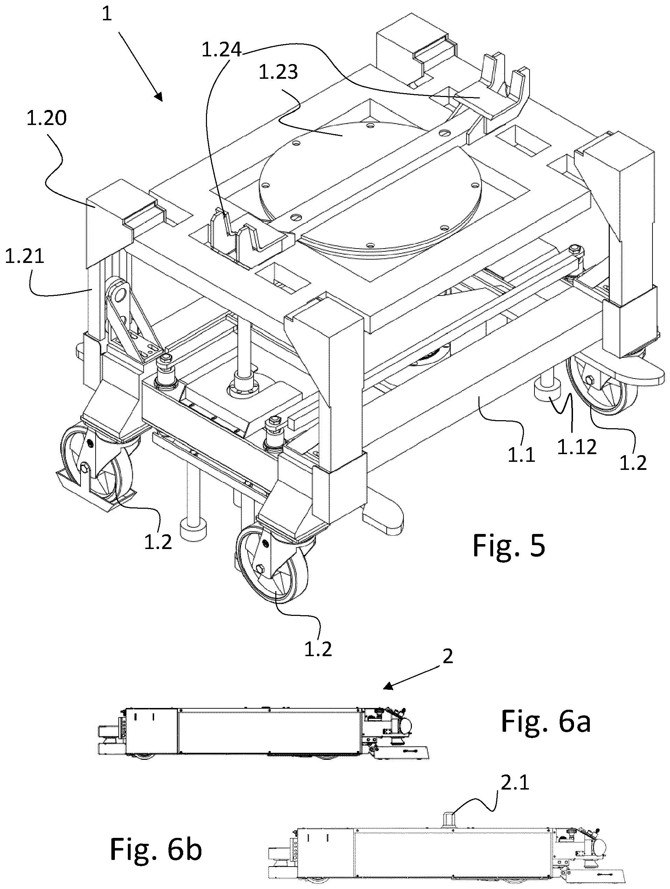

With reference to Figs. 6a and 6b it is disclosed that the AGV is equipped with a retractable/extractable pin 2.1. According to a preferred aspect of the present invention, the pin, in addition to being retractable into the body of the AGV and extractable from it, it is also rotatable with respect to a development axis of the same pin. Pin 2.1 is suitable for generating an actuation force, i.e. it is connected to an engine of the AGV vehicle capable of providing an actuation torque, necessary, as will be clear later, to lift or lower the semi-finished product supported by the trolley 1.

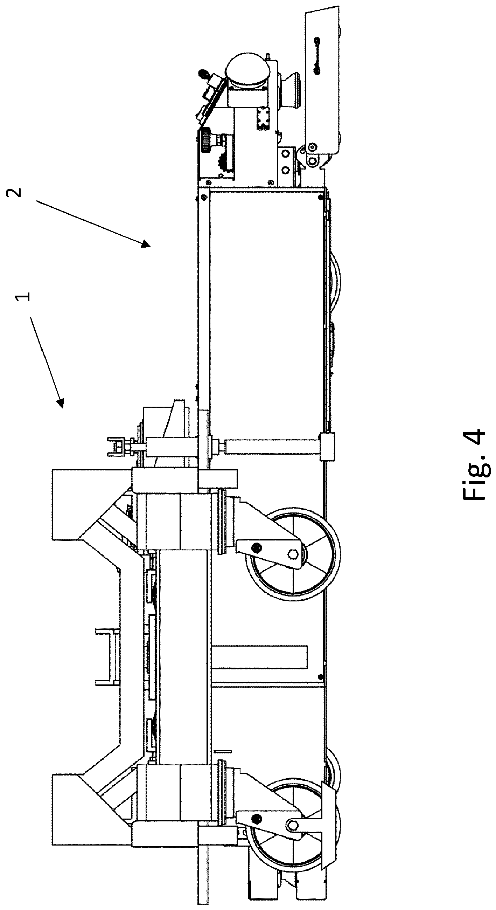

The pin is also equipped with a front and/or perimeter shape that allows a rotatable coupling, in order to guide the rotation of another component which is described below. Fig. 4 shows a transitory condition in which AGV 2 advances, leaving the trolley behind from which the AGV is decoupled. In this condition, evidently, pin 2.1 is retracted as shown in Fig. 6a.

It can be noted that the mobile part of the trolley in Fig. 4 is lower than the other figures, as depending on the circumstances it may be necessary to reduce the minimum height from the support surface of the vehicle being worked on. It is worth highlighting that an industrial vehicle is much larger and bulkier than a car and therefore operators must assume comfortable positions to be able to access the vehicle during the assembly phases.

### Trolley description

With reference to Fig. 5, the trolley 1 includes a base 1.1 to which the wheels 1.2 are fixed, so that in operating conditions of engagement of the AGV, two or more wheels are arranged on one side of the AGV and a further two or more wheels are arranged on the opposite side of the AGV.

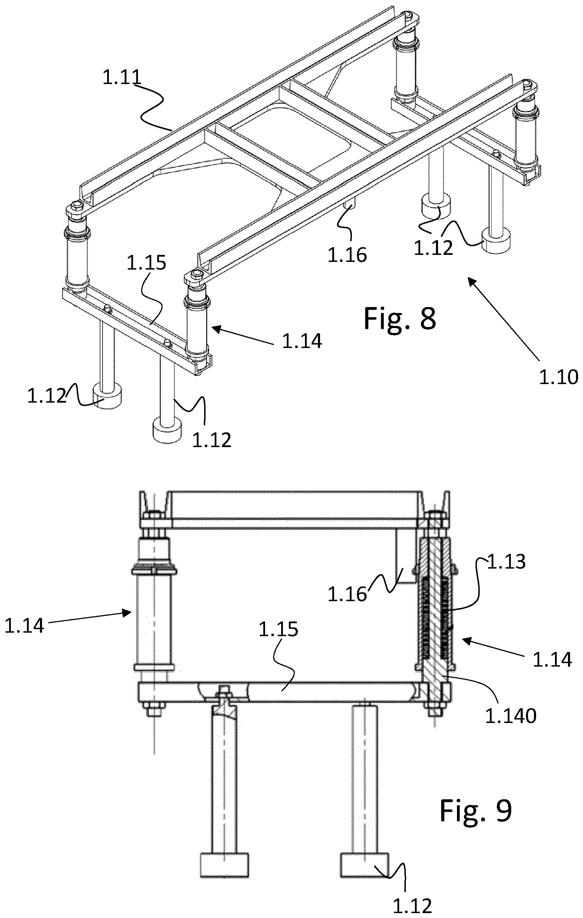

The trolley includes a braking system 1.10 shown in Fig. 8 separately from the remaining trolley, which preferably acts directly on the trolley support surface. The reason for this choice is the fact that the wheels 1.2 are fixed to the base 1.1 of the trolley and are of the swivel type, i.e. they are equipped with a support rotatably fixed to the base, with the rotation axis of the wheel offset with respect to an axis passing through the fixing point of the support to the base.

However, the braking system can be modified to act on the wheels rather than the supporting surface. For example, it can be used a scheme with at least one non-swivel wheel and the other swivel wheels and have the brake acting on the non-swivel wheel.

With reference to Figs. 8 and 9, the braking system comprises a rigid frame, which in its preferential form has an H shape for the reasons described below.

This frame is connected to at least one pad 1.12 and loaded by at least one spring 1.13 so as to force the pad into contact with the surface supporting the trolley.

With reference to Fig. 9, at least one spring cylinder is fixed to the base 1.1 and allows the relative movement of the braking system 1.10 with respect to the trolley.

In particular, the spring cylinder 1.13 is fixed to the base so as to have a rotation axis of the cylinder in a vertical position, when the trolley is in operational conditions. Inside the spring cylinder, the helical spring 1.13 has a first end in contact with a stop seat obtained inside the cylinder in an upper position. The opposite end of the helical spring 1.13 is in contact with a stop seat obtained on a rod 1.130, fitted inside the cylinder 1.14. The rod 1.140 of the cylinder 1.14 has two opposite ends, projecting with respect to the cylinder 1.14, with an upper end fixed to the H-shaped frame 1.11 and a lower end, opposite to the upper end, fixed directly or indirectly to the pad 1.12.

As can be seen from Figs. 5, 8 and 9, it is preferred to have two pads for each support side of the trolley and therefore the pads are fixed to the H-shaped frame by means of a pair of spring cylinders 1.14 which support an intermediate rod 1.15 to which the pads 1.12 are fixed.

The H-shaped frame 1.11 includes a push pin 1.16 arranged to be actuated by pin 2.1 of the AGV 2. So that, when the AGV is in the coupled position with the trolley, the lifting of the pin 2.1 of the AGV causes the H-shaped frame to rise against the action of the springs, causing the pads 1.12 to detach from the trolley support surface.

Further details are given below about the position of the push pin 1.16 of the braking system 1.10.

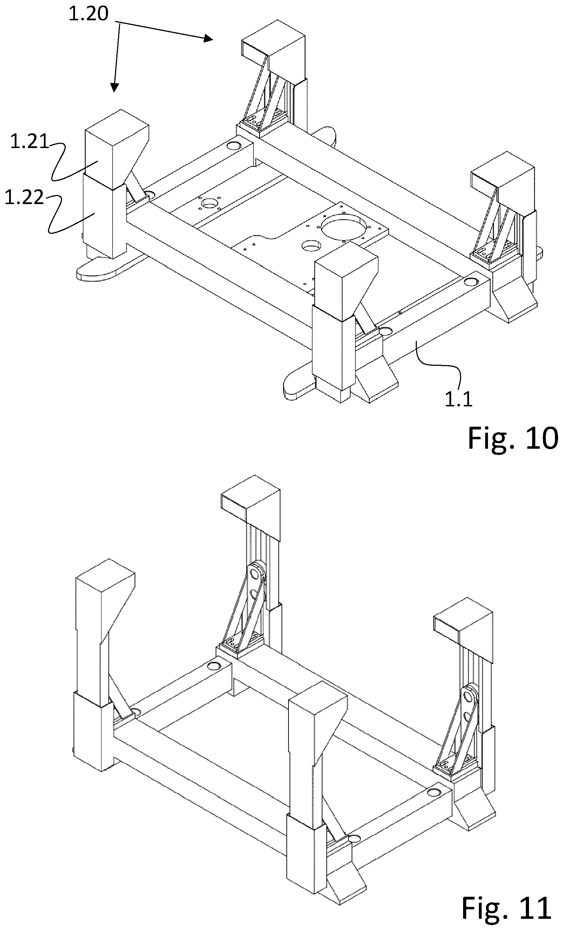

Fig. 10 shows the base 1.1 of the trolley 1. The seats of the spring cylinders 1.14, for fixing them to the base 1.1, are clearly visible.

It is worth highlighting that the braking system, equipped with at least one pad, can be fixed to the base 1.1 by means of a pin, so that the movement of the H-shaped frame is of a rotary type, so as to obtain the insertion or disconnection of the braking system depending on the position of the pin 2.1 of the AGV.

The base 1.1 further supports a mobile portion 1.20 capable of raising and lowering in relation to the circumstances. The mobile portion preferably comprises four arms 1.21 slidably fixed to the base 1.1 for example through box-shaped guides to which the arms 1.21 are coupled. Preferably, the arms themselves are also made with an open box profile, in which bearings are arranged, fixed to the base 1.1 so as to guarantee a pure translation movement of the mobile portion 1.20 with respect to the base 1.1 and in particular to prevent jamming of the mobile portion with respect to the base during lifting and lowering operations. Figs. 10 and 11 differ, except for some portions of the base not shown in Fig. 11, in that the arms 1.21 which support the mobile part 1.20 are in a lowered and raised configuration respectively.

The movement of the mobile portion is achieved by implementing a worm screw movement mechanism 1.30, which is relatively compact.

More specifically, the movement mechanism 1.30 is activated by rotating pin 2.1 of the AGV, when the AGV is coupled with the trolley and pin 2.1 is in the extracted position as shown in figure 6b.

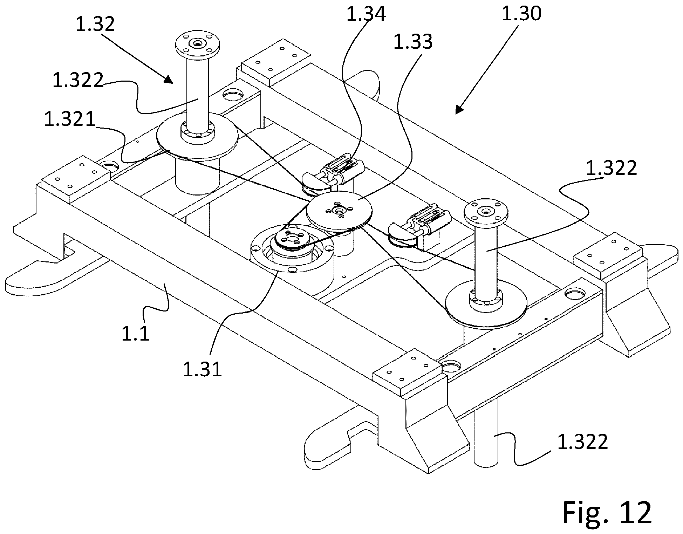

Fig. 12 shows the movement mechanism supported by the base 1.1 of the trolley 1.

A master wheel 1.31 is arranged to receive the motion from pin 2.1 of the AGV and to transmit it to at least one worm screw 1.32. The master wheel has a cylindrical symmetrical shape, therefore in the shape of a cylinder or truncated cone, on which an external gear is keyed externally and internally it is configured to couple with the pin to receive the rotation motion from it.

The master wheel can be placed within the perimeter defined by the base 1.1, approximately rectangular in shape, or it can be placed outside this perimeter and appropriately supported by a shelf fixed to the base 1.1.

The external gear is arranged to pull a chain which allows the transmission of motion to the worm screw 1.32.

The worm screw has
- a first portion 1.321 rotatably fixed to the base 1.1, having a cylindrical shape with an internal thread and
- a second portion 1.322 equipped with an external thread so that the second portion is suitable for screwing into the first portion.

The free end of the second portion 1.322 of the worm screw 1.32 is fixed to the mobile portion 1.20 of the trolley 1 and a rotation of the first portion 1.321 around its symmetry axis determines an axial displacement of the second portion 1.322, which therefore induces the mobile portion 1.20 to raise or lower according to the direction of rotation imposed on the master wheel 1.31.

The motion is transmitted from the master wheel to at least one worm screw via a transmission chain, possibly via a rev multiplier 1.33.

Preferably, one or more tensioners are arranged to appropriately tension the transmission chain.

It is worth highlighting that at least one worm screw is arranged near one of the support sides of the trolley, so as not to obstruct the passage of the AGV, which, therefore, can couple and uncouple from the trolley, regardless of the position of the mobile portion 1.20 with respect to the base.

The mobile portion 1.20 preferably includes a frame 1.22, fixed to the arms 1.21, arranged to support a device for connecting the trolley to the industrial vehicle being assembled.

In particular, with reference to figure 5, the frame of the mobile portion supports a fifth wheel 1.23, which, in turn, supports a clamp 1.24 to clamp a part of the industrial vehicle being assembled.

Thanks to the fifth wheel, which is obviously completely optional, it is possible to move the vehicle along curves with a limited radius of curvature.

A relevant, although not essential, aspect of the present invention is the fact that, when the trolley is assembled, the push pin 1.16 of the braking system 1.10 faces inside the master wheel 1.31 of the actuation mechanism 1.30 of the mobile portion 1.20.

The master wheel, internally, has a complementary shape, at least partially with the pin 2.1 of the AGV 2, so that pin 2.1 is able to transfer a rotary motion to the master wheel.

However, the pin 2.1 for engaging the master wheel 1.31 is arranged to push up the push pin 1.16, resulting, as described above, in disengaging the braking system. In other words, pin 2.1 of the AGV determines the expulsion, albeit partial, of the push pin 1.16 from the master wheel. Evidently, the concept of having a push pin 1.16 facing into the master wheel 1.31 can be used independently of the braking system implemented. The push pin 1.16 can for example be combined with a brake shoe system that acts on a wheel via a traction cable known in the field of vehicular brakes or via a hydraulic circuit.

Following the detailed description presented, it is clear that the AGV requires only one component, namely pin 2.1 to manage the coupling of the AGV to trolley 1, while at the same time determining the release of the braking system. Furthermore, the pin can rotate to control the position of the mobile portion 1.20 of the trolley.

Therefore, three functions are concentrated in a single moving part of the AGV: mechanical coupling, brake release and height adjustment.

### Synchronous working functioning

As previously mentioned, an ultra-flat AGV does not have the structural characteristics to support and move an industrial vehicle during its assembly. However, the use of the trolley described above allows the weight of the vehicle to be offloaded onto the trolley, requiring only propulsion capacity from the AGV. A single AGV does not have the power necessary to move a heavy vehicle, therefore the use of two or more AGVs combined with the same number of trolleys is envisaged.

Generally, AGVs are equipped with optical readers to read special coloured bands placed on the ground to indicate the trajectory to follow. Furthermore, the AGVs are programmable so as to instruct them to perform predetermined operations depending on the progress of the industrial vehicle assembly procedure.

During this phase of operation, according to a preferred aspect of the present invention one of the AGVs assumes the role of master, while the other, or the others, assumes the function of slave, executing the instructions received from the master, in order to operate in synchronous with the master vehicle.

In fact, when two or more AGVs are implemented for the movement of an industrial vehicle, it is essential that they move in a mutually synchronized manner.

For this purpose, the AGVs according to the present invention communicate with each other, via a reserved wireless channel, in order to significantly reduce the latency of transmissions.

Constructive variations to the non-limiting example described are possible, without departing from the scope of protection of the present invention, including all the equivalent embodiments for a person skilled in the art, to the content of the claims.

From the above description, the person skilled in the art is able to realize the object of the invention without introducing further construction details.

### Components list:

| | |
|---|---|
| Trolley | 1 |
| base | 1.1 |
| wheel | 1.2 |
| braking system | 1.10 |
| H-shaped frame | 1.11 |
| Pad | 1.12 |
| spring | 1.13 |
| spring cylinder | 1.14 |
| cylinder rod | 1.140 |
| intermediate auction | 1.15 |
| push pin | 1.16 |
| mobile portion | 1.20 |
| arm | 1.21 |
| frame | 1.22 |
| fifth wheel | 1.23 |
| actuation mechanism | 1.30 |
| master wheel | 1.31 |
| worm screw | 1.32 |
| first portion of the worm screw | 1.321 |
| second portion of the worm screw | 1.322 |

## Claims

1. System for handling a semi-finished product, in particular a heavy or commercial vehicle, comprising
- a trolley (1) equipped with three or more wheels (1.2),
- an self-driving vehicle (2), equipped with a pin (2.1) extractable from a body of the vehicle to assume an extracted configuration and a retracted configuration inside the body of the vehicle;
the trolley (1) being configured in the form of a portal to allow the vehicle (2) to fit under the trolley and attach the trolley using the pin (2.1), the trolley being **characterized by** the fact that it includes a braking system (1.10) arranged to automatically disengage when said pin (2.1) is inserted into the trolley.

2. System according to claim 1, wherein said trolley comprises a movable portion (1.20) suitable for raising or lowering and actuation means (1.30) to cause a lifting and lowering action of the movable portion (1.20) and wherein said pin (2.1) of the AGV vehicle is capable of rotating around its own longitudinal development axis and wherein said actuation means are configured to operationally couple with said pin and convert said rotation motion into said lifting and lowering action of the mobile portion.

3. System according to any one of claims 1 or 2, wherein said actuation means (1.30) comprise
- a master wheel (1.31) rotatably fixed to the trolley, having a cylindrical symmetrical shape and arranged to couple to the pin (2.1) of the AGV vehicle (2) and receive said rotational motion from it and
- at least one worm screw (1.32) having a first portion (1.321) rotatably fixed to the trolley and equipped with an internal thread and a second portion (1.322) having an external threaded portion so that the second portion is suitable for screwing into the first portion,
wherein the first portion (1.321) of the worm screw is arranged to receive the rotation motion from the master wheel and the second portion (1.322) of the worm has one end fixed to the movable part (1.20) of the trolley (1).

4. System according to any of the previous claims 1 - 3, wherein said braking system comprises a push pin (1.16) arranged to face the master wheel so that the engagement of the pin (2.1) of the AGV causes an expulsion of the push pin (1.16) at least partially from the master wheel, and wherein the braking system is arranged to deactivate when said push pin is expelled from said master wheel.

5. System according to any of the previous claims, wherein said braking system comprises at least one pad (1.12) arranged to exert a braking action on a support surface of the trolley (1) and a spring (1.13) arranged to press the pad against said support surface and wherein said push pin (1.16) is operatively connected to at least one pad so as to cause a detachment of the pad from the support surface, against the action of the spring, when the push pin is expelled from the master wheel.

6. Trolley for moving a semi-finished product in a system according to any of claims 1 - 5, in particular a heavy or commercial vehicle, configured in the form of a portal to allow an autonomously driven vehicle (2) to fit under the trolley and hook the trolley using a pin (2.1), the trolley being **characterized by** the fact that it includes a braking system (1.10) arranged to automatically disengage when said pin (2.1) is inserted into the trolley.

7. Trolley according to claim 6, comprising a movable portion (1.20) adapted to raise and lower and actuation means (1.30) to cause a lifting and lowering action of the movable portion (1.20), wherein the actuation means comprise
- a master wheel (1.31) rotatably fixed to the trolley, having a cylindrical symmetrical shape and arranged to couple to the pin (2.1) of an AGV vehicle (2) and receive a rotation motion from it and wherein the actuation means are arranged to convert said rotation motion into said lifting and lowering action of the movable portion.

8. Trolley according to claim 7, wherein said actuation means (1.30) further comprises
- at least one worm screw (1.32) having a first portion (1.321) rotatably fixed to the trolley and equipped with an internal thread and a second portion (1.322) having an external portion so that the second portion is suitable for screwing into the first portion,
wherein the first portion (1.321) of the worm screw is arranged to receive the rotation motion from the master wheel and the second portion (1.322) of the worm screw has one end fixed to the movable part (1.20) of the trolley (1) .

9. Trolley according to any of the previous claims 6 - 8, wherein said braking system comprises a push pin (1.16) arranged to face the master wheel so that the engagement of the pin (2.1) of the AGV causes an expulsion of the push pin (1.16), at least partially, from the master wheel, and in which the braking system is arranged to deactivate when said push pin is expelled from said master wheel.

10. Self-driving vehicle (2) AGV for the movement of a semi-finished product in a system according to any of claims 1 - 5, **characterized by** the fact that it includes a pin (2.1) extractable from a body of the vehicle and by the fact that said pin is capable of rotating with respect to a relative longitudinal development axis, generating an actuation force and is capable of translating and wherein the rotation movement and the translation movement are independent of each other.

11. System for moving a semi-finished product, in particular a heavy or commercial vehicle, comprising two or more pairs, wherein each pair comprises a trolley (1) and AGV vehicle (2) according to any of the previous claims, wherein the two or more vehicles are configured to support a common semi-finished product and in which in operating conditions, a single vehicle assumes a master function and the remaining vehicles assume a slave function, so that each movement of the semi-finished product is coordinated between the vehicles (2) and in that the master vehicle instructs the remaining slave vehicles via a reserved wireless channel.
